(19) Europäisches Patentamt
European Patent Office
Office européen des brevets

(11) Veröffentlichungsnummer : **0 411 370 B1**

(12) # EUROPÄISCHE PATENTSCHRIFT

(45) Veröffentlichungstag der Patentschrift :
**01.12.93 Patentblatt 93/48**

(51) Int. Cl.$^5$ : **C08G 77/448**

(21) Anmeldenummer : **90113510.3**

(22) Anmeldetag : **14.07.90**

(54) **Spezielle Polydiorganosiloxanblockcopolycarbonate.**

(30) Priorität : **28.07.89 DE 3924992**

(43) Veröffentlichungstag der Anmeldung :
**06.02.91 Patentblatt 91/06**

(45) Bekanntmachung des Hinweises auf die Patenterteilung :
**01.12.93 Patentblatt 93/48**

(84) Benannte Vertragsstaaten :
**DE ES FR GB IT NL**

(56) Entgegenhaltungen :
**EP-A- 0 374 635**
**DE-A- 3 334 782**
**DE-A- 3 506 472**
**US-A- 3 419 634**

(73) Patentinhaber : **BAYER AG**
**D-51368 Leverkusen (DE)**

(72) Erfinder : **Horlacher, Peter, Dr.**
**Ginsterweg 4**
**D-7913 Senden (DE)**
Erfinder : **Hähnsen, Heinrich, Dr.**
**Homberger Strasse 16**
**D-4100 Duisburg 14 (DE)**
Erfinder : **Grigo, Ulrich, Dr.**
**Michelsheide 9**
**D-4152 Kempen 3 (DE)**
Erfinder : **Bushong, William Craig, Dr.**
**c/o Mobay Corporation Plastics Building 8**
**Pittsburgh, PA 15205 (US)**
Erfinder : **Schlak, Ottfried, Dr.**
**Massliebchenweg 17**
**D-5000 Köln 80 (DE)**

**EP 0 411 370 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Polydiorganosiloxanblockcopolycarbonate sowie ihre Herstellung aus Polydiorganosiloxanen mit Hydroxyaryloxy-Endgruppen sind bekannt (siehe beispielsweise DE-OS 3 506 472, US-PS 3 189 662, DE-OS 3 334 782, US-PS 3 419 634, US-PS 3 821 325 und US-PS 3 832 419).

Polysiloxanblockcopolycarbonate können in bekannter Weise zur Beschichtung, zur Isolation für Teile und Schichtkörper und in Klebemitteln verwendet werden. Sie können überall dort eingesetzt werden, wo bislang die bekannten aromatischen Polycarbonate Verwendung finden und wo zusätzlich verbesserte mechanische Eigenschaften bei tiefen Temperaturen und/oder verbessertes Brandverhalten erwünscht sind, z.B. auf dem Kfz-Sektor und Elektrosektor. Durch den Einbau von Polydiorganosiloxanen in Polycarbonate wird jedoch die Oberflächenspannung herabgesetzt. Dies erweist sich inbesondere bei Anwendungen als Nachteil oder Problem, bei denen der Formkörper aus Polydiorganosiloxan-Polycarbonat lackiert wird.

Überraschenderweise wurde gefunden, daß Polydiorganosiloxanblockcopolycarbonate auf Basis von Diphenolen der Formel (I)

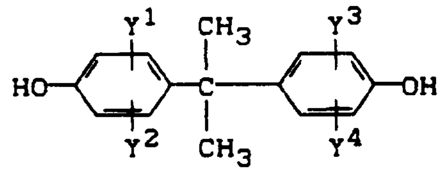

(I),

worin
$Y^1$ bis $Y^4$ gleich oder verschieden sind und Wasserstoff, Halogen oder $C_1$-$C_4$-Alkyl, vorzugsweise Methyl, Wasserstoff, Chlor oder Brom bedeuten,
durch Einsatz von α,ω-Bishydroxyaryloxypolydiorganosiloxane nachfolgender Struktur zu einer verbesserten Oberflächenspannung führen. Durch erhöhte Oberflächenspannung wird auch die Benetzung verbessert, wodurch z.B. eine deutlich verbesserte Lackierbarkeit resultiert.

Die erfindungsgemäß einzusetzenden α,ω-Bishydroxyaryloxypolydiorganosiloxane entsprechen der Formel (II)

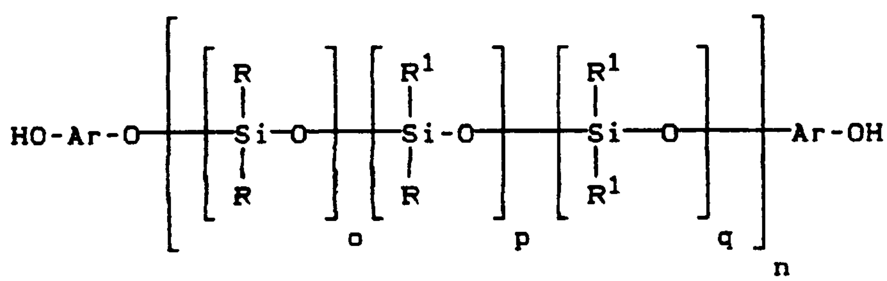

(II)

worin
R und $R^1$ gleich oder verschieden sind und lineares $C_1$-$C_{20}$-Alkyl, verzweigtes $C_3$-$C_{30}$-Alkyl, $C_2$-$C_6$-Alkenyl oder $C_6$-$C_{14}$-Aryl sind, wobei die Alkyl-Reste und die Aryl-Reste halogeniert sein können und wobei vorzugsweise $R=R^1=CH_3$ ist,
worin
die Anzahl der Diorganosiloxy-Einheiten n (o + p + q) = 5 bis 200, vorzugsweise 20 bis 80 ist, wobei o, p und q als solche Null oder ganze Zahlen von 1 bis 200 sein können, und worin -Ar- entweder ein zweibindiger Rest der Formel (III)

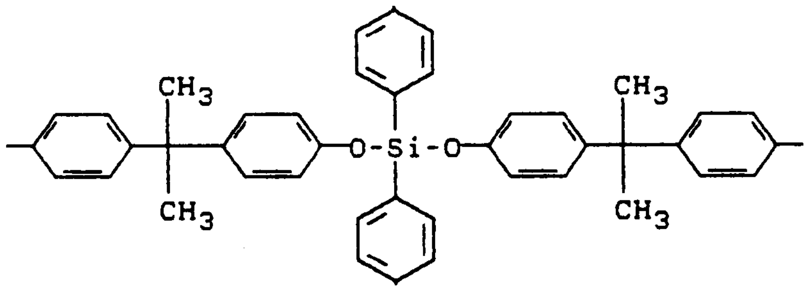 (III)

oder ein zweibindiger Rest der allgemeinen Formel (IV) ist,

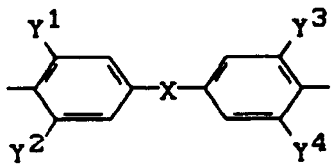 (IV) ,

worin $Y^1$ bis $Y^4$ die für Formel (I) genannte Bedeutung haben und außerdem Phenyl sein können, und worin -X- ein zweibindiger Rest ausgewählt aus

-O-, 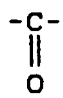 , 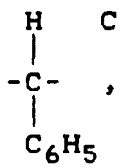 , 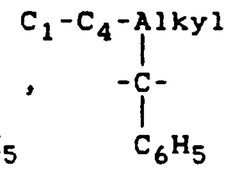 , 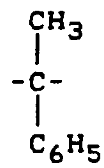 , $-SO_2$ ,

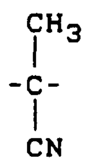 , 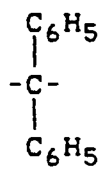 , 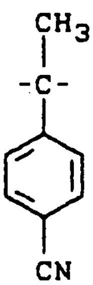 , 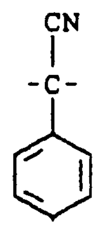

und (IVa)

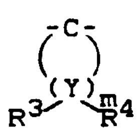 (IVa)

ist, wobei in (IVa)

"m" eine ganze Zahl von 4 bis 7, vorzugsweise 4 oder 5,

$R^3$ und $R^4$ für jedes Y individuell wählbar, unabhängig voneinander Wasserstoff oder $C_1$-$C_6$-Alkyl bedeuten und

Y Kohlenstoff bedeutet,

mit der Maßgabe, daß $R^3$ und $R^4$ gleich oder verschieden sind.

Für die Reste R und $R^1$ in Formel (II) bedeutet halogeniert teilweise oder vollständig chloriert, bromiert oder fluoriert.

Beispiele für die Reste R und $R^1$ in Formel (II) sind Methyl, Ethyl, Propyl, n-Butyl, tert.-Butyl, Vinyl, Phenyl, Naphthyl, Chlormethyl, Trifluorpropyl, Perfluorbutyl und Perfluoroctyl.

Gegenstand der vorliegenden Erfindung ist somit ein Verfahren zur Herstellung von Polydiorganosiloxanblockcopolycarbonaten aus Diphenolen und α,ω-Bishydroxyaryloxypolydiorganosiloxanen, Kettenabbrechern, Carbonatspendern und gegebenenfalls Verzweigern nach den bekannten Reaktionsbedingungen der Phasengrenzflächenpolykondensation, das dadurch gekennzeichnet ist, daß man als Diphenole solche der Formel (I) in Mengen von 99,95 Mol-% bis 80 Mol-% vorzugsweise von 99,94 Mol-% bis 90 Mol-%, und als α,ω-Bishydroxyaryloxypolydiorganosiloxane solche der Formel (II) in Mengen von 0,05 Mol-% bis 20 Mol-%, vorzugsweise von 0,06 Mol-% bis 10 Mol-% einsetzt, wobei die Molsumme aus (I) + (II) jeweils 100 Mol-% ist.

Gegenstand der vorliegenden Erfindung sind außerdem die nach dem erfindungsgemäßen Verfahren erhältlichen Polydiorganosiloxanblockcopolycarbonate.

Die erfindungsgemäß erhältlichen Polydiorganosiloxanblockcopolycarbonate haben mittlere Molekulargewichte $\overline{M}_w$ (Gewichtsmittel, gemessen in bekannter Weise durch Ultrazentrifugation oder Streulichtmessung) zwischen 10.000 und 300.000, vorzugsweise zwischen 15.000 und 80.000.

Die Diphenole der Formel (I) sind als solche bekannt oder nach bekannten Verfahren herstellbar (siehe beispielsweise H. Schnell, Chemistry and Physics of Polycarbonates, Polymer Reviews, Vol. 9, 1964, Interscience Publishers New York, London, Sydney).

Beispiele für geeignete Diphenole der Formel (I) sind
2,2-Bis-(4-hydroxyphenyl)-propan
2,2-Bis-(3,5-dimethyl-4-hydroxyphenyl)-propan
2,2-Bis-(3-methyl-4-hydroxyphenyl)-propan
2,2-Bis-(3,5-dichlor-4-hydroxyphenyl)-propan und
2,2-Bis-(3,5-dibrom-4-hydroxyphenyl)-propan.

Bevorzugte Diphenole der Formel (I) sind
2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan und
2,2-bis-(3,5-dibrom-4-hydroxyphenyl)-propan.

Die α,ω-Bishydroxyaryloxypolydiorganosiloxane der Formel (II) sind im Prinzip bekannt oder nach bekannten Verfahren, wie etwa gemäß DE-OS 3 334 782 (Le A 22 594) herstellbar.

Hierbei werden a,ω-bisacyloxyendgruppenhaltige Polydiorganosiloxane der Formel (V),

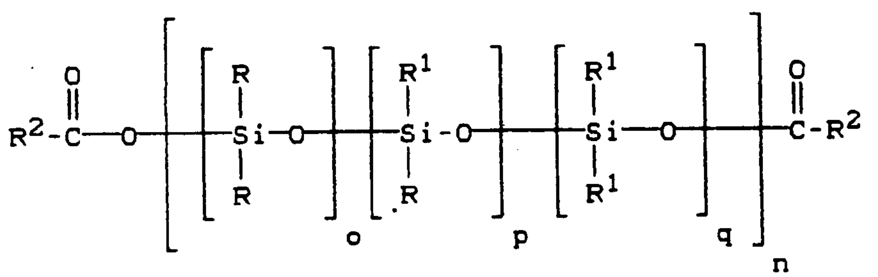
(V)

worin
R, $R^1$, o, p, q und n die für Formel (II) genannte Bedeutung haben und worin $R^2$ $C_1$-$C_{10}$-Alkyl ist,
mit Diphenolen der Formel (VI)

HO-Ar-OH (VI),

worin -Ar- ebenfalls die für Formel (II) genannte Bedeutung hat, im Molverhältnis (V):(VI) wie 1:2 bis 1:20, gegebenenfalls unter Verwendung von anorganischen Basen, beispielsweise Alkalicarbonaten oder Erdalkalicarbonaten wie $Na_2CO_3$ oder $K_2CO_3$, in mindestens stöchiometrischen Mengen, bezogen auf Mole (V), umgesetzt. Es können hierbei sowohl einheitliche Verbindungen der Formeln (V) und/oder (VI) als auch Gemische der Verbindungen der Formeln (V) und/oder (VI) eingesetzt werden.

Es hat sich als vorteilhaft herausgestellt, das in einem inerten organischen Lösungsmittel gelöste Bisacyloxypolydiorganosiloxan zu einer Lösung des Diphenols in einem inerten organischen Lösungsmittel, die gegebenenfalls zusätzlich anorganische Base enthält, hinzuzugeben, obwohl auch jede andere Reihenfolge der Zugabe ohne Komplikation erfolgen kann.

Wird bei der Umsetzung der Reaktanten auf die Verwendung einer Base verzichtet, so kann die freiwerdende Säure, beispielsweise Essigsäure, auch destillativ, gegebenenfalls unter reduziertem Druck, entfernt werden.

Die Reaktionstemperaturen liegen zwischen 0°C und 150°C, vorzugsweise zwischen 70°C und 130°C.

Die als Ausgangsverbindungen einzusetzenden α,ω-bis-acyloxyendgruppenhaltige Polydiorganosiloxane sind entweder bekannt (siehe Europäische Patentschriften Nr. 0 003 285 oder 0 012 892) oder nach literaturbekannten Verfahren herstellbar.

Die als Diphenole der Formel (VI) einzusetzenden Verbindungen sind bezüglich (VIa)

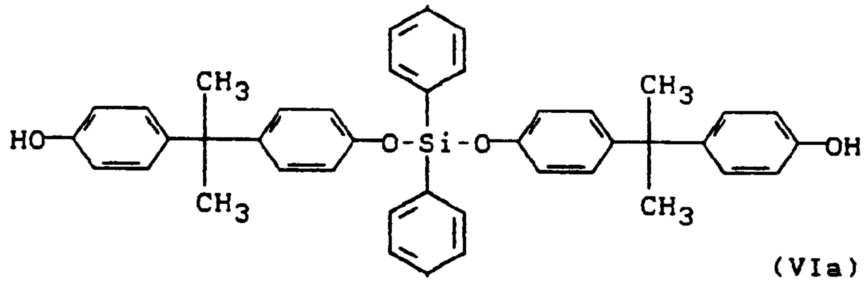

(VIa)

und
bezüglich (VIb)

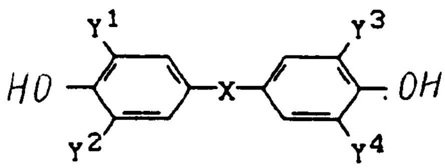

(VIb),

worin $Y^1$ bis $Y^4$ die für Formel (IV) genannte Bedeutung haben und worin -X-

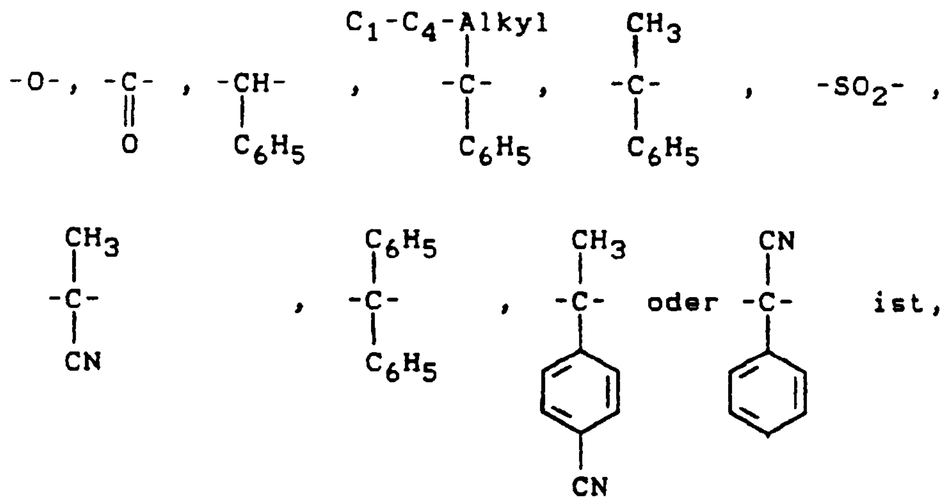

oder

ist,

aus Encylopedia of polymer science and engineering, Volume 11, second edition, John Wiley and Sons, Inc. 1988, S. 648 entweder bekannt oder nach bekannten Verfahren herstellbar und sind bezüglich (VIc)

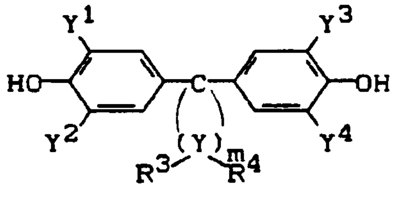

(VIc),

worin $Y^1$ bis $Y^4$ die für Formel (IV) genannte Bedeutung haben und Y, $R^3$ und $R^4$ die für Formel (IVa) genannte

Bedeutung haben, Gegenstand der deutschen Patentanmeldung P 3 832 396.6 (Le A 26 344) sowie in den japanischen Offenlegungsschriften 62 039/1986 62040/1986 und 105 550/1986 beschrieben oder nach der Lehre dieser Literaturstellen herstellbar.

Beispiele für geeignete Diphenole der Formel (VI) sind
Bis-(4-hydroxyphenyl)-ether,
4,4'-Dihydroxybenzophenon,
Bis-(4-hydroxyphenyl)-phenylmethan,
Bis-(4-hydroxyphenyl)-diphenylmethan,
Bis-(4-hydroxyphenyl)-cyano-phenyl-methan,
Di-(4-(p-Hydroxyphenylisopropyl)-phenoxy)-diphenylsilan,
Bis-(4-hydroxy-3,5-dimethyl-phenyl)-ether,
Bis-(4-hydroxy-3,5-dimethyl-phenyl)-phenylmethan,
1,1-Bis-(4-hydroxyphenyl)-3,3,5-trimethylcyclohexan,
1,1-Bis-(4-hydroxyphenyl)-3,3-dimethylcylohexan,
1,1-Bis-(4-hydroxyphenyl)-3,3-dimethylcyclopentan und
1,1-Bis-(4-hydroxyphenyl)-cyclohexan.

Bevorzugte Diphenole der Formel (VI) sind
Di-(4-(p-hydroxy-phenyl-isopropyl)-phenoxy)-diphenylsilan,
4,4'-Dihydroxybenzophenon,
1,1-Bis-(4-hydroxyphenyl)-1-(p-cyanophenyl)-ethan und
Bis-(4-hydroxyphenyl)-cyano-phenylmethan.

Beispiele für geeignete α,ω-bisacyloxyendgruppenhaltige Polydiorganosiloxane (V) sind

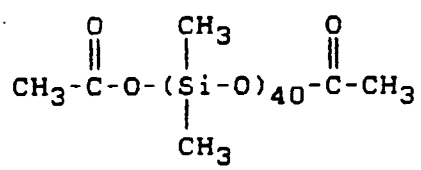

(Va)

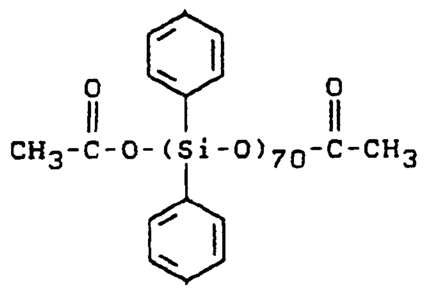

(Vb)

und

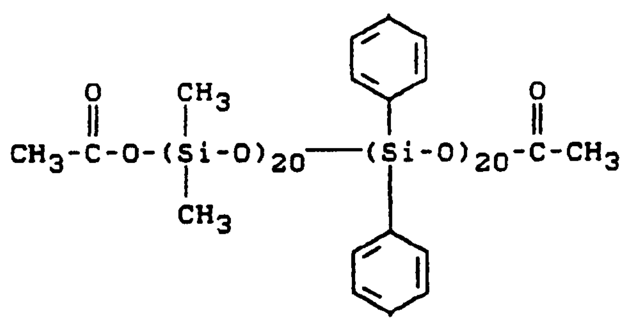

(Vc)

Ein Beispiel für bevorzugte Verbindungen (V) ist (Vd)

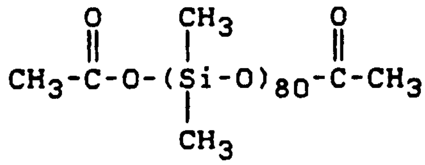

(Vd).

Beispiele für die erfindungsgemäß einzusetzenden α,ω-Bishydroxyaryloxypolydiorganosiloxane der Formel (II) sind

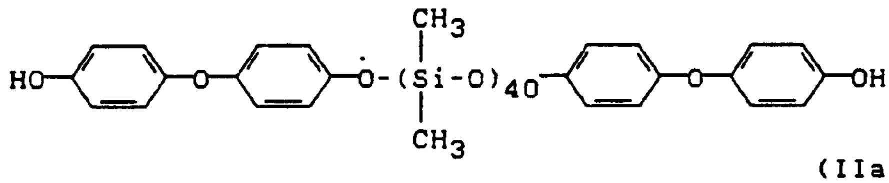

(IIa)

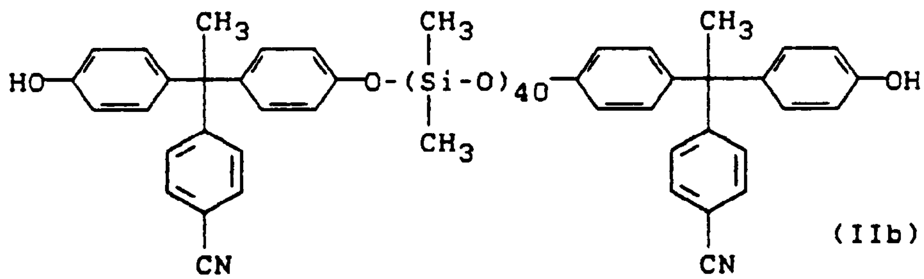

(IIb)

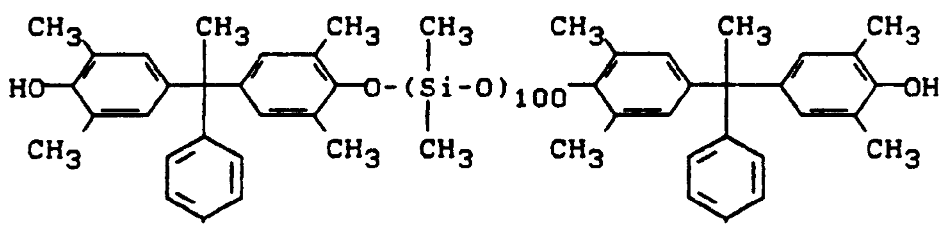

(IIc)

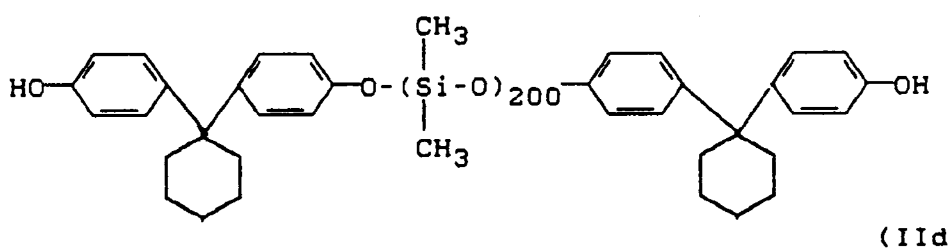

(IId)

und

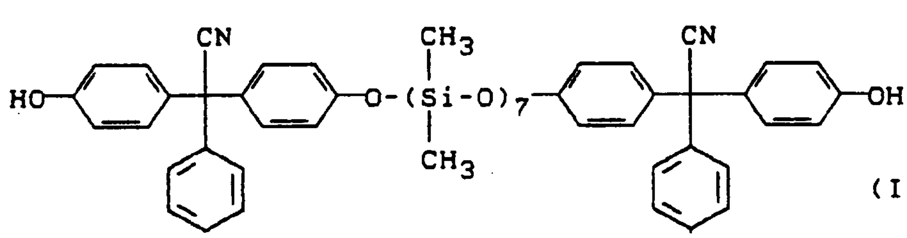

(IIe).

Ein Beispiel für bevorzugte Verbindungen der Formel (II) ist (IIf)

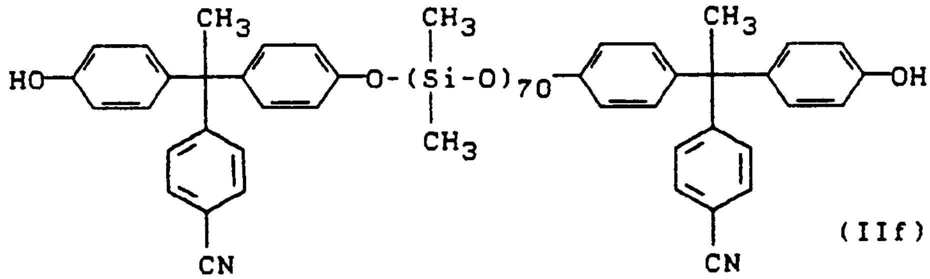

(IIf).

Beispiele für geeignete Kettenabbrecher sind die in der Polycarbonatsynthese üblichen Phenole, und zwar außer Phenol selbst halogenierte wie 2,4,6-Tribromphenol und alkylierte Phenole wie

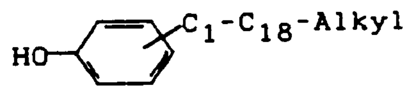

Anstelle der Phenole können auch deren Halogenkohlensäureester eingesetzt werden. Die Menge an Kettenabbrecher richtet sich nach dem Molekulargewicht der herzustellenden Blockcopolycarbonate. Im allgemeinen werden 0,5 Mol-% bis 10,0 Mol-%, bezogen auf eingesetzte Diphenole eingesetzt.

Als Carbonatspender für die Herstellung nach dem Zweiphasengrenzflächenverfahren dienen in bekannter Weise Kohlensäurehalogenide, insbesondere Kohlensäurechloride, wie beispielsweise Phosgen, $COBr_2$, oder die Bischlorkohlensäureester der Diphenole (I) oder der $\alpha,\omega$-Bishydroxyaryloxypolydiorganosiloxane (II), welche in bekannter Weise aus den Verbindungen (I) und (II) herstellbar sind, wobei jeweils pro Halogen-Kohlensäuregruppe weniger als 1/2 Mol Diphenol verwendet wird.

Bevorzugter Carbonatspender ist Phosgen.

Als Verzweiger sind solche mit drei oder mehr als drei funktionellen Gruppen, insbesondere solche mit drei oder mehr als drei phenolischen Hydroxylgruppen einsetzbar, wobei die überlicherweise bekannten Mengen an Verzweiger zwischen 0,05 und 2 Mol-%, bezogen auf Diphenole (I) + (II), einzuhalten sind. Die Herstellung verzweigter Polycarbonate ist beispielsweise in den DT-OS 1 570 533 und DT-OS 1 595 762 sowie in US-PS 3 544 514 beschrieben.

Einige der verwendbaren Verbindungen mit drei oder mehr als drei phenolischen Hydroxylgruppen sind beispielsweise 2,4-Bis-(4-hydroxyphenyl-isopropyl)-phenol, 2,6-bis-(2'-hydroxy-5'-methyl-benzyl)-4-methylphenol, 2-(4-Hydroxyphenyl)-2-(2,4-dihydroxyphenyl)-propan und 1,4-Bis-(4,4'-dihydrokytriphenylmethyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Die erfindungsgemäße Herstellung der Polydiorganosiloxanblockcopolycarbonate noch dem Phasengrenzflächenverfahren kann beispielsweise gemäß DE-OS 3 506 472 (Le A 23 654) dadurch erfolgen, daß man die Zugabe der $\alpha,\omega$-Bishydroxyaryloxypolydiorganosiloxane (II) und der Kettenabbrecher zusammen mit den Diphenolen (I) vor der Carbonatspenderzugabe also beispielsweise vor der Phosgeneinleitung durchführt, oder dadurch, daß man die Verbindungen (I) und (II) separat während oder nach der Phosgeneinleitung zudosiert; in jedem Fall aber vor der Zugabe des Polykondensationskatalysators.

Geeignete Katalysatoren für die Polykondensation nach dem Zweiphasengrenzflächenverfahren sind die für die Polycarbonatsynthese bekannten tertiären aliphatischen Aminkatalysatoren wie Trimethylamin, Triethylamin, n-Tripropylamin, n-Tributylamin oder N-Ethylpiperidin; gegebenenfalls können auch die bekannten quartären Ammoniumsalze wie beispielsweise Tetrabutylammoniumbromid eingesetzt werden (siehe DE-OS 3 506 472).

Geeignete organische Lösungsmittel für das Zweiphasengrenzflächenverfahren sind die für die thermoplastischen Polycarbonate bekannten wie beispielsweise Methylenchlorid oder Chlorbenzol.

Die Mengen an organischer Phase werden vorzugsweise so gewählt, daß die Zweiphasengrenzflächenpolykondensation mit 5 bis 20 %iger organischer Lösung, vorzugsweise mit 10 bis 15 %iger organischer Lösung durchgeführt wird.

Geeignete basische Verbindungen für die Bildung der wäßrigen alkalischen Phase sind Lösungen von LiOH, NaOH, KOH, $Ca(OH)_2$ und/oder $Ba(OH)_2$ in Wasser.

Bei der Herstellung nach dem Zweiphasengrenzflächenverfahren sind die Mengen an wäßrig alkalischer Phase volumenmäßig vorzugsweise gleich der Menge der gesamten organischen Phase. Sie können volumenmäßig auch größer oder kleiner als die gesamten Mengen der organischen Phase sein.

Der pH-Wert der wäßrigen Phase liegt wahrend der Reaktion zwischen pH 9 - 14, vorzugsweise zwischen pH 12 - 13.

Die jeweils im Rahmen der Molverhältnisse gemäß Anspruch 1 einzusetzenden Reaktantenverhältnisse von Diphenol (I) zu α,ω-Bishydroxyaryloxy-Polydiorganosiloxan (II) richten sich nach dem zu erzielenden Gehalt an Poly(diorganosiloxan)-Einheiten im herzustellenden Blockcopolymeren, wobei normalerweise die quantitative Umsetzung der Reaktanten gegeben ist.

Die Isolierung der erfindungsgemäßen Blockcopolycarbonate kann nach der von der Polycarbonatsynthese her bekannten Methode erfolgen. Hierbei wird die organische, das Copolycarbonat gelöst enthaltende Phase abgetrennt, gewaschen und anschließend das Copolycarbonat durch Eindampfen der Lösung isoliert, wobei als Endstufe des Aufarbeitungsprozesses vorzugsweise ein Ausdampfextruder benutzt wird.

Die erfindungsgemäßen Blockcopolycarbonate können in bekannter Weise zu verschiedenen Formteilen, Halbzeugen, Folien, Massivplatten, Stegdoppelplatten, Blaskörpern, Flaschen etc. in an sich bekannter Weise verarbeitet werden, beispielsweise durch Extrusion oder Spritzgußverfahren oder nach dem Blasverfahren.

Den erfindungsgemäßen Blockcopolycarbonaten können vor oder während oder nach ihrer Herstellung oder während ihrer Verarbeitung zu Formkörpern die für Polycarbonate üblichen Additive, also Stabilisatoren gegen $H_2O$, Hitze oder UV-Licht, Flammschutzmittel, Pigmente, Fließmittel, Entformungsmittel, Antistatika, Füllstoffe, wie Glaspulver, Graphit, Molybdänsulfid oder Quarzerzeugnisse, und Verstärkungsstoffe, wie Glasfasern oder perfluorierte Polyolefine, in den für thermoplastische Polycarbonate üblichen Mengen zugesetzt werden.

Gegenstand der vorliegenden Erfindung ist somit auch ein Verfahren zur Einarbeitung von Additiven in die erfindungsgemäßen Polydiorganosiloxanblockcopolycarbonate, das dadurch gekennzeichnet ist, daß man mindestens ein Additiv ausgewählt aus Stabilisatoren, Flammschutzmitteln, Pigmenten, Fließmitteln, Entformungsmitteln, Anstistatika, Füllstoffen und Verstärkungsstoffen den Polydiorganosiloxanblockcopolycarbonaten vor oder während oder nach ihrer Herstellung oder während ihrer Verarbeitung zu Formkörpern in bekannter Weise zumischt.

Gegenstand der vorliegenden Erfindung sind außerdem die nach dem erfindungsgemäßen Verfahren erhältlichen Polydiorganosiloxanblockcopolycarbonate, die dadurch gekennzeichnet sind, daß sie mindestens ein Additiv, ausgewählt aus Stabilisatoren, Flammschutzmitteln, Pigmenten, Fließmitteln, Entformungsmitteln, Antistatika, Füllstoffen und Verstärkungsstoffen enthalten.

Die erfindungsgemäßen polydiorganosiloxanblockcopolycarbonate sind einsetzbar überall dort, wo beispielsweise Formkörper mit hoher Zähigkeit lackiert werden müssen, was mit den bislang eingesetzten Polysiloxanblockcopolyarbonaten nicht oder nur sehr schwer gelingt.

Meßmethode

Die Oberflächenspannung eines Festkörpers wird nach dem Stand der Technik über Messung der Benetzungs-Randwinkel von Testflüssigkeiten (Wasser, Glycerin, Formamid, Phthalsäuredimethylester, Methylenjodid, Hexadecan) ermittelt. Mit Hilfe der gemessenen Randwinkel und der Werte der Oberflächenspannungen der Testflüssigkeiten mit bekannten polaren/unpolaren Anteilen, erhält man danach die Oberflächenspannung des Festkörpers ebenfalls in einen polaren und unpolaren Anteil aufgeteilt. Die Messung wurde folgendermaßen durchgeführt:

Es wird zunächst ein Videobild des Tropfens erzeugt, dann werden die Helligkeitswerte der dazugehörigen Bildpixel digitalisiert und in einem Rechner gespeichert. Der Rechner ermittelt und approximiert analytisch durch ein Polynom die Kontur des Tropfens und in der Umgebung des Dreiphasenpunktes, wo Flüssigkeit, Festkörperoberfläche und Atmosphäre aneinanderstoßen, in einem X-Y-Koordinatensystem. Durch Bildung der ersten Ableitung des Polynoms an der Stelle des Dreiphasenpunktes wird der Randwinkel bestimmt.

Der Vorteil dieses Verfahrens liegt u.a. in seiner großen Genauigkeit.

Beispiel 1 (Vergleichsbeispiel)

In ein Gefäß, das mit Kühler, Thermometer, Tropftrichter und Rührer versehen ist, gibt man 19,2 Gew.-Teile Bisphenol A und 1800 Gew.-Teile Chlorbenzol. Es wird auf 100°C erwärmt und mit 11,6 Gew.-Teilen Kaliumcarbonat versetzt. Danach gibt man zu der Mischung unter Rückfluß über eine Zeit von 15 Minuten eine Lösung von 178 Gew.-Teilen α,ω-Bisacetoxypolydimethylsiloxan, $P_n = 80$, in 178 Gew.-Teilen Chlorbenzol, wobei das Rühren für zwei weitere Stunden fortgesetzt wird. Es wird auf etwa 80°C abgekühlt und noch heiß filtriert.

Die Lösung von Polydimethylsiloxan mit Bisphenol A-Endgruppen (= 5 Gew.-% $SiMe_2O$) wird in einem Reaktionskolben, der mit Rührer, Phosgeneinlaßrohr, Rückflußkühler, Innenthermometer und Tropftrichter ausgerüstet ist, mit 3035 Gew.-Teilen Bisphenol A, 3034 Gew.-Teilen Natriumhydroxid, 34 700 Gew.-Teilen Wasser, 17 800 Gew.-Teilen Dichlormethan und 13 100 Gew.-Teilen Chlorbenzol und 74,2 Gew.-Teilen Phenol versetzt. Bei Raumtemperatur werden 2216 Gew.-Teile Phosgen eingeleitet, wobei der pH durch Zugabe von 45%iger Natronlauge zwischen 12 und 13 gehalten wird. Das Einleiten nimmt ca. eine Stunde in Anspruch. Danach werden 11 Gew.-Teile Triethylamin zugesetzt und weitere 45 Minuten bei pH 12 bis 13 nachgerührt. Das Cokondensat wird nach für Polycarbonat gängigen Methoden aufgearbeitet.

| Oberfl. spannung mN/m | unpolarer Anteil mN/m | polarer Anteil mN/m | polarer Anteil % |
|---|---|---|---|
| 32,5 | 30,3 | 2,2 | 6,8 |

Beispiel 2

Das obige Verfahren wurde wiederholt, jedoch anstelle des Polydimethylsiloxans mit Bisphenol A-Endgruppen wurde ein Polydimethylsiloxan mit 1,4'-Dihydroxybenzophenon-Endgruppen, das entsprechend obiger Vorschrift hergestellt wurde, eingesetzt.

| Oberfl. spannung mN/m | unpolarer Anteil mN/m | polarer Anteil mN/m | polarer Anteil % |
|---|---|---|---|
| 42,9 | 42,5 | 0,4 | 0,9 |

Beispiel 3

Das obige Verfahren wurde wiederholt, jedoch anstelle des Bisphenol A terminierten Polydimethylsiloxans wurde ein Polydimethylsiloxan mit 1,1-Bis-(4-hydroxyphenyl)cyclohexan-Endgruppen, das entsprechend obiger Vorschrift hergestellt wurde, eingesetzt.

| Oberfl. spannung mN/m | unpolarer Anteil mN/m | polarer Anteil mN/m | polarer Anteil % |
|---|---|---|---|
| 34,3 | 32,0 | 2,3 | 6,7 |

Beispiel 4

Das obige Verfahren wurde wiederholt, jedoch anstelle des Bisphenol A terminierten Polydimethylsiloxans wurde ein Polydimethylsiloxan mit Bis-(4-hydroxyphenyl)-cyanophenyl-methan-Endgruppen, das entsprechend obiger Vorschrift hergestellt wurde, eingesetzt.

| Oberfl. spannung mN/m | unpolarer Anteil mN/m | polarer Anteil mN/m | polarer Anteil % |
|---|---|---|---|
| 37,3 | 34,6 | 2,7 | 7,2 |

Beispiel 5 (Vergleich)

Anstelle eines Polydimethylsiloxans (Pn = 80) wurde eine Polydimethylsiloxan (Pn = 40) mit Bisphenol A-Endgruppen eingesetzt.

| Oberfl. spannung mN/m | unpolarer Anteil mN/m | polarer Anteil mN/m | polarer Anteil % |
|---|---|---|---|
| 32,7 | 30,8 | 1,9 | 5,8 |

Beispiel 6

Anstelle eines Polydimethylsiloxans (Pn = 40) mit Bisphenol A-Endgruppen wurde folgendes α,ω-bishydroxyarylendgruppenhaltiges Polydimethylsiloxan eingesetzt.

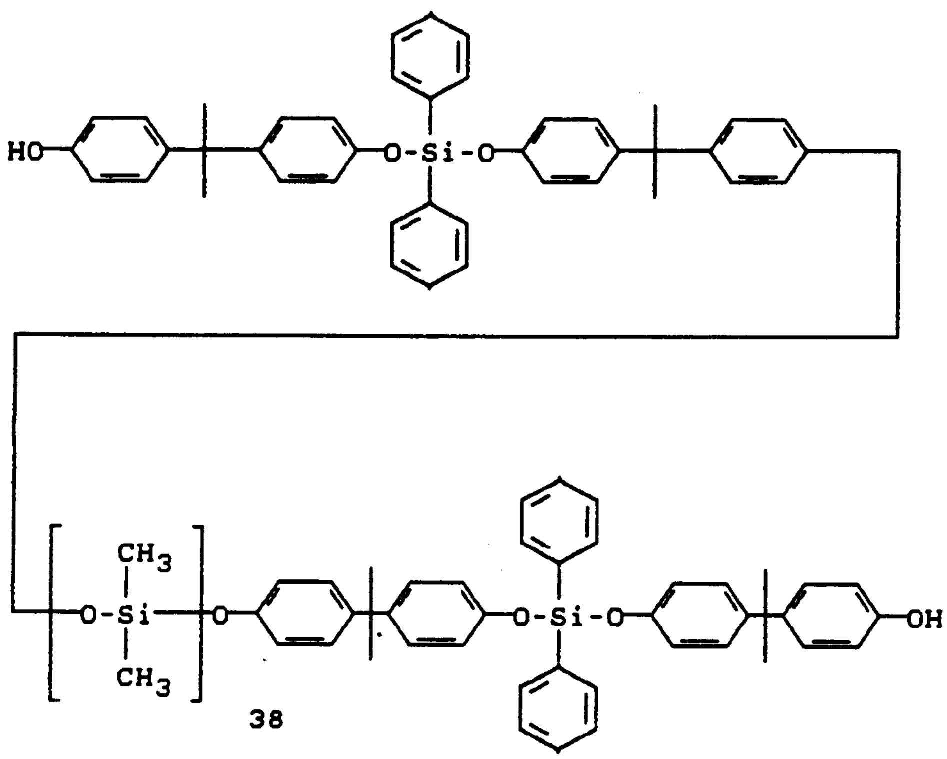

| Oberfl. spannung mN/m | unpolarer Anteil mN/m | polarer Anteil mN/m | polarer Anteil % |
|---|---|---|---|
| 38,6 | 35,4 | 3,2 | 8,3 |

**Patentansprüche**

**Patentansprüche für folgende Vertragsstaaten : DE, FR, GB, IT, NL**

1. Verfahren zur Herstellung von Polydiorganosiloxanblockcopolycarbonaten aus Diphenolen und α,ω-Bishydroxyaryloxypolydiorganosiloxanen, Kettenabbrechern, Carbonatspendern und gegebenenfalls Verzweigern nach den bekannten Reaktionsbedingungen der Phasengrenzflächenpolykondensation, dadurch gekennzeichnet, daß man
als Diphenole solche der Formel (I)

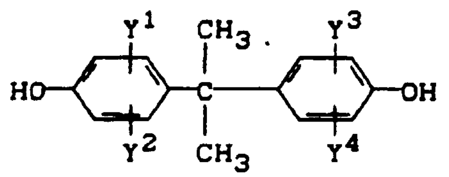

(I),

worin
$Y^1$ bis $Y^4$ gleich oder verschieden sind und Wasserstoff, Halogen oder $C_1$-$C_4$-Alkyl bedeuten,
in Mengen von 99,95 Mol-% bis 80 Mol-%, und
als α,ω-Bihydroxyaryloxypolydiorganosiloxane solche der Formel (II)

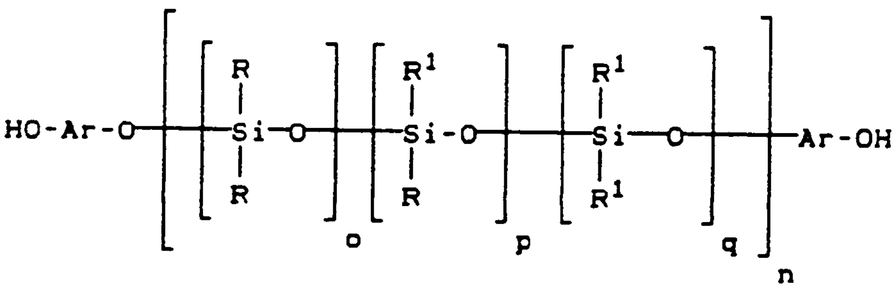

(II)

worin

R und $R^1$ gleich oder verschieden sind und lineares $C_1$-$C_{20}$-Alkyl, verzweigtes $C_3$-$C_{20}$-Alkyl, $C_2$-$C_6$-Alkenyl oder $C_6$-$C_{14}$-Aryl sind, wobei die Alkyl-Reste und die Aryl-Reste halogeniert sein können,

und
worin die Anzahl der Diorganosiloxyeinheiten n (o + p + q) = 5 bis 200 ist, wobei o, p und q als solche Null oder ganze Zahlen von 1 bis 200 sein können und worin -Ar- entweder ein zweibindiger Rest der Formel (III)

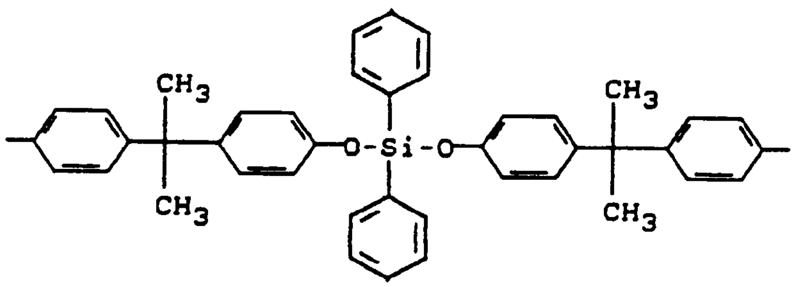

(III)

ist oder ein zweibindiger Rest der allgemeinen Formel (IV) ist,

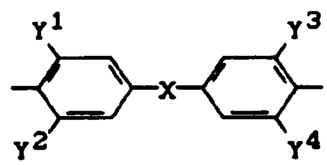

(IV),

worin $Y^1$ bis $Y^4$ die für Formel (I) genannte Bedeutung haben und außerdem Phenyl sein können, und worin -X- ein zweibindiger Rest ausgewählt aus

-O-, 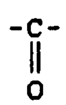 , 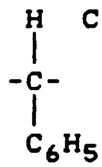 , 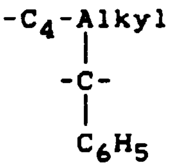 , 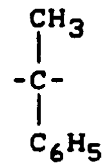 , -$SO_2$-

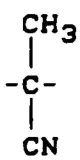 , 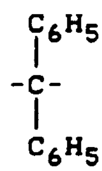 , 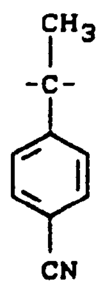 , 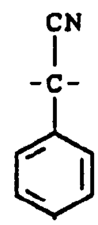

und (IVa)

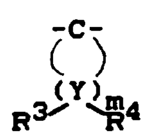

(IVa)

ist wobei in (IVa)
"m" eine ganze Zahl von 4 bis 7,
$R^3$ und $R^4$ für jedes Y individuell wählbar, unabhängig voneinander Wasserstoff oder $C_1$-$C_6$-Alkyl, und
Y Kohlenstoff bedeuten,
mit der Maßgabe, daß $R^3$ und $R^4$ gleich oder verschieden sind,
in Mengen von 0,05 Mol-% bis 20 Mol-% einsetzt, wobei die Molsumme aus (I) + (II) jeweils 100 Mol-% ist.

2. Polydiorganosiloxanblockcopolycarbonate erhältlich nach dem Verfahren des Anspruches 1.

3. Verfahren zur Einarbeitung von Additiven in die Polydiorganosiloxanblockcopolycarbonate des Anspruchs 2, dadurch gekennzeichnet, daß man mindestens ein Additiv ausgwählt aus Stabilisatoren, Flammschutzmitteln, Pigmenten, Fließmitteln, Entformungsmitteln, Antistatika, Füllstoffen und Verstärkungsstoffen den Polydiorganosiloxanblockcopolycarbonaten vor oder während oder nach ihrer Herstellung oder während ihrer Verarbeitung zu Formkörpern in bekannter Weise zumischt.

4. Polydiorganosiloxanblockcopolycarbonate gemäß Anspruch 2, dadurch gekennzeichnet, daß sie mindestens ein Additiv, ausgewählt aus Stabilisatoren, Flammschutzmitteln, Pigmenten, Fließmitteln, Entformungsmitteln, Antistatika, Füllstoffen und Verstärkungsstoffen enthalten.

**Patentansprüche für folgenden Vertragsstaat : ES**

1. Verfahren zur Herstellung von Polydiorganosiloxan blockcopolycarbonaten aus Diphenolen und α,ω-Bishydroxyaryloxypolydiorganosiloxanen, Kettenabbrechern, Carbonatspendern und gegebenenfalls Verzweigern nach den bekannten Reaktionsbedingungen der Phasengrenzflächenpolykondensation, dadurch gekennzeichnet, daß man
als Diphenole solche der Formel (I)

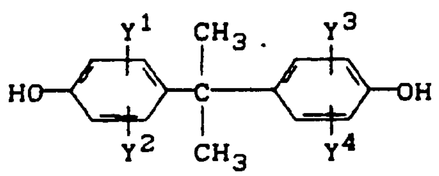

(I),

worin
$Y^1$ bis $Y^4$ gleich oder verschieden sind und Wasserstoff, Halogen oder $C_1$-$C_4$-Alkyl bedeuten,
in Mengen von 99,95 Mol-% bis 80 Mol-%, und
als α,ω-Bihydroxyaryloxypolydiorganosiloxane solche der Formel (II)

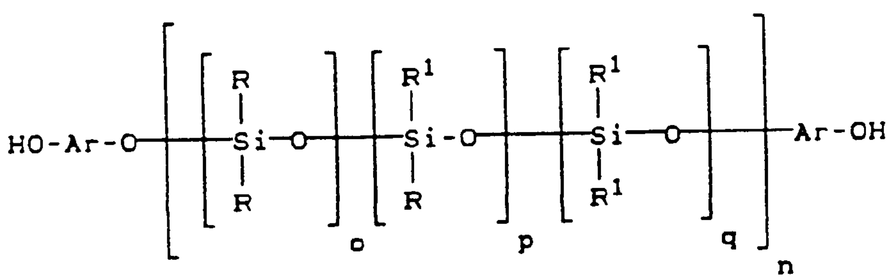

(II)

worin

R und $R^1$ gleich oder verschieden sind und lineares $C_1$-$C_{20}$-Alkyl, verzweigtes $C_3$-$C_{20}$-Alkyl, $C_2$-$C_6$-Alkenyl oder $C_6$-$C_{14}$-Aryl sind, wobei die Alkyl-Reste und die Aryl-Reste halogeniert sein können,

und
worin die Anzahl der Diorganosiloxyeinheiten n (o + p + q) = 5 bis 200 ist, wobei o, p und q als solche Null oder ganze Zahlen von 1 bis 200 sein können und worin -Ar- entweder ein zweibindiger Rest der Formel (III)

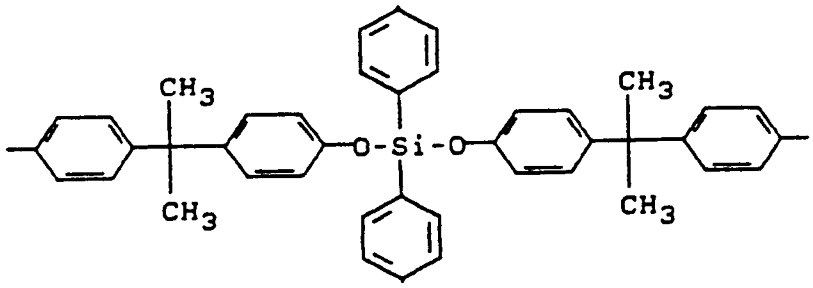

(III)

ist oder ein zweibindiger Rest der allgemeinen Formel (IV) ist,

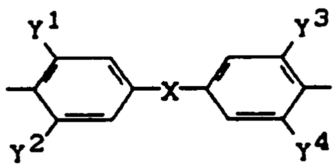

(IV),

worin $Y^1$ bis $Y^4$ die für Formel (I) genannte Bedeutung haben und außerdem Phenyl sein können, und worin -X- ein zweibindiger Rest ausgewählt aus

-O-, 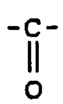 , 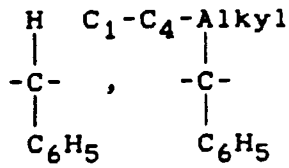 , 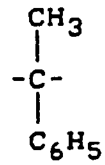 , $-SO_2-$

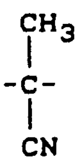 , 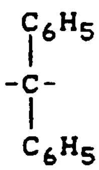 , 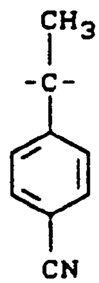 , 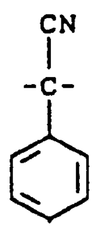

und (IVa)

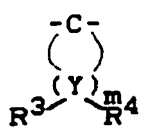

(IVa)

ist, wobei in (IVa)

"m" eine ganze Zahl von 4 bis 7,

$R^3$ und $R^4$ für jedes Y individuell wahlbar, unabhangig voneinander Wasserstoff oder $C_1$-$C_6$-Alkyl, und

Y Kohlenstoff bedeuten,

mit der Maßgabe, daß $R^3$ und $R^4$ gleich oder verschieden sind,

in Mengen von 0,05 Mol-% bis 20 Mol-% einsetzt, wobei die Molsumme aus (I) + (II) jeweils 100 Mol-% ist.

2. Verfahren zur Einarbeitung von Additiven in die gemäß dem Verfahren nach Anspruch 1 erhältlichen Polydiorganosiloxanblockcopolycarbonate, dadurch gekennzeichnet, daß man mindestens ein Additiv ausgewählt aus Stabilisatoren, Flammschutzmitteln, Pigmenten, Fließmitteln, Entformungsmitteln, Antistatika, Füllstoffen und Verstärkungsstoffen den Polydiorganosiloxanblockcopolycarbonaten vor oder während oder nach ihrer Herstellung oder wahrend ihrer Verarbeitung zu Formkörpern in bekannter Weise zumischt.

## Claims

### Claims for the following Contracting States : DE, FR, GB, IT, NL

1. A process for the preparation of polydiorganosiloxane block copolycarbonates from diphenols and α,ω-bis-hydroxyaryloxy polydiorganosiloxanes, chain terminators, carbonate donors and optionally branching agents under the known reaction conditions of phase interface polycondensation, characterised in that the diphenols are compounds corresponding to the following formula (I)

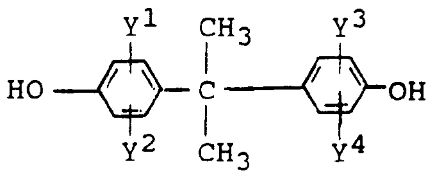

(I),

wherein
$Y^1$ to $Y^4$ are identical or different and denote hydrogen, halogen or $C_1$-$C_4$-alkyl,
used in quantities of from 99.95 mol-% to 80 mol-%, and
the α,ω-bishydroxyaryloxy polydiorganosiloxanes are compounds corresponding to the following formula (II)

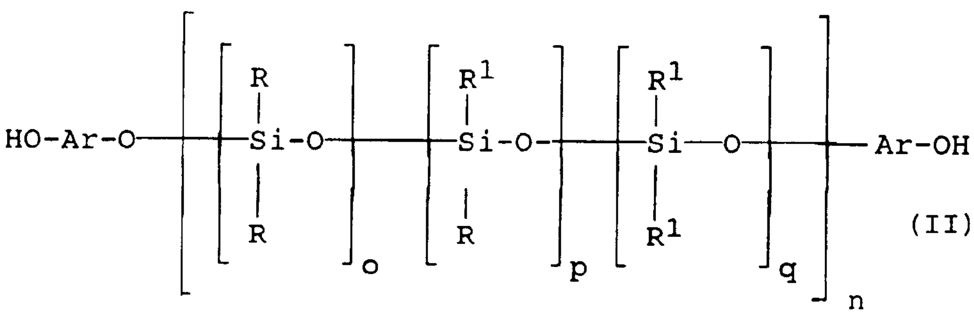

(II)

wherein
R and $R^1$ are identical or different and denote straight chain $C_1$-$C_{20}$-alkyl, branched $C_3$-$C_{20}$-alkyl, $C_2$-$C_6$-alkenyl or $C_6$-$C_{14}$-aryl and the alkyl groups and aryl groups may be halogenated, and
wherein the number of diorganosiloxy units n (o + p + q) = 5 to 200, where o, p and q may denote zero or integers with a value from 1 to 200 and wherein -Ar- denotes either a divalent radical corresponding to formula (III)

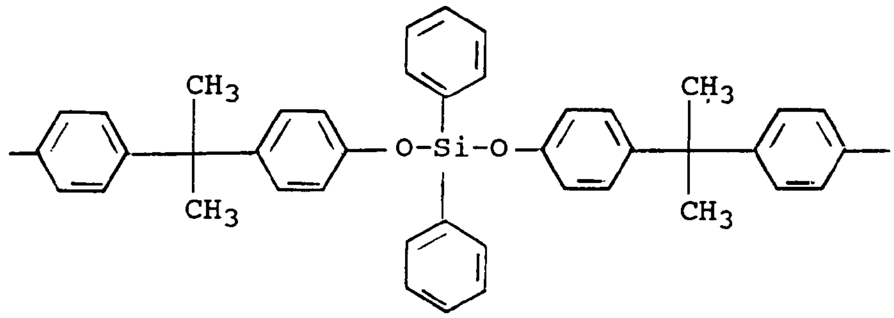 (III)

or a divalent radical corresponding to the general formula (IV)

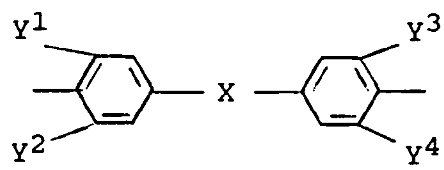 (IV)

wherein $Y^1$ to $Y^4$ have the meanings indicated for formula (I) and may also stand for phenyl, and wherein X denotes a divalent radical selected from

-O-, 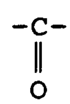, 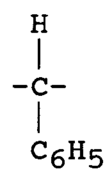, 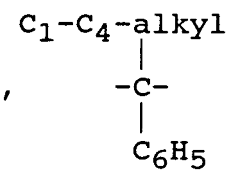, 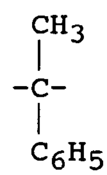, $-SO_2-$

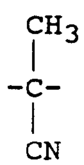, 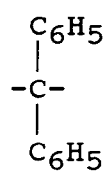, 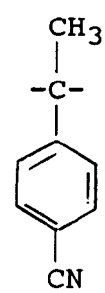, 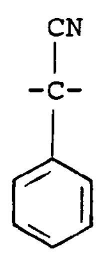

and (IVa)

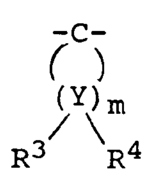 (IVa),

in which formula (IVa)
"m" denotes an integer with a value from 4 to 7,

$R^3$ and $R^4$ can be selected separately for each Y and denote, independently of one another, hydrogen or $C_1$-$C_6$-alkyl and

Y denotes carbon

with the proviso that $R^3$ and $R^4$ are identical or different.
used in quantities of from 0.05 mol-% to 20 mol-%, the molar sum of (I) + (II) amounting to 100 mol-%.

2. Polydiorganosiloxane block copolycarbonates btainable by the process of Claim 1.

3. A process for the incorporation of additives in the polydiorganosiloxane block copolycarbonates of Claim 2, characterised in that at least one additive selected from stabilizers, flame retardants, pigments, flow improvers, mould release agents, antistatic agents, fillers and reinforcing materials is added in known manner to the polydiorganosiloxane block copolycarbonates before or during or after their preparation or during their processing to produce mouldings.

4. Polydiorganosiloxane block copolycarbonates according to Claim 2, characterised in that they contain at least one additive selected from stabilizers, flame retardants, pigments, flow improvers, mould release agents, antistatic agents, fillers and reinforcing materials.

**Claims for the following Contracting State : ES**

1. A process for the preparation of polydiorganosiloxane block copolycarbonates from diphenols and α,ω-bis-hydroxyaryloxy polydiorganosiloxanes, chain terminators, carbonate donors and optionally branching agents under the known reaction conditions of phase interface polycondensation, characterised in that the diphenols are compounds corresponding to the following formula (I)

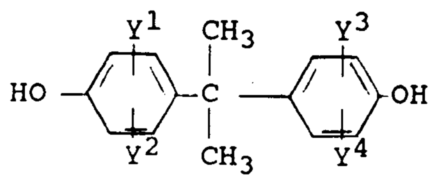

(I),

wherein
$Y^1$ to $Y^4$ are identical or different and denote hydrogen, halogen or $C_1$-$C_4$-alkyl,
used in quantities of from 99.95 mol-% to 80 mol-%, and
the α,ω-bishydroxyaryloxy polydiorganosiloxanes are compounds corresponding to the following formula (II)

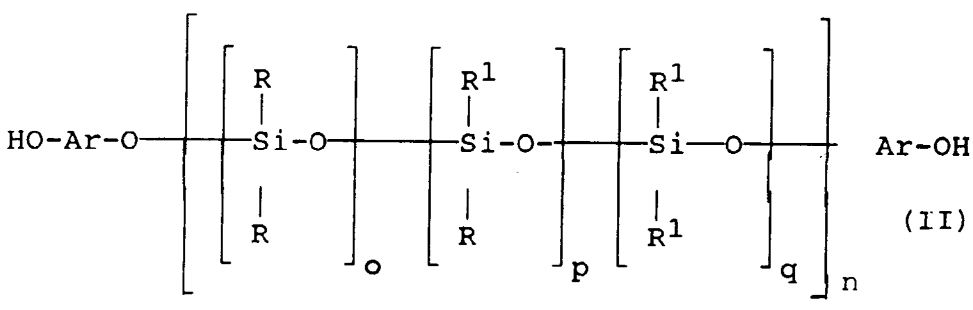

(II)

wherein
R and $R^1$ are identical or different and denote straight chain $C_1$-$C_{20}$-alkyl, branched $C_3$-$C_{20}$-alkyl, $C_2$-$C_6$-alkenyl or $C_6$-$C_{14}$-aryl and the alkyl groups and aryl groups may be halogenated,
and
wherein the number of diorganosiloxy units n (o + p + q) = 5 to 200, where o, p and q may denote zero or integers with a value from 1 to 200 and wherein -Ar- denotes either a divalent radical corresponding to formula (III)

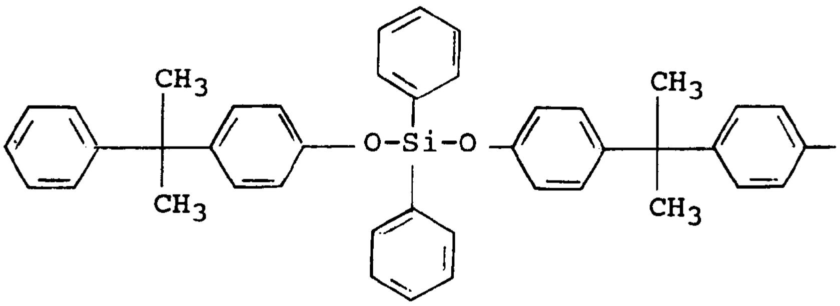 (III)

or a divalent radical corresponding to the general formula (IV)

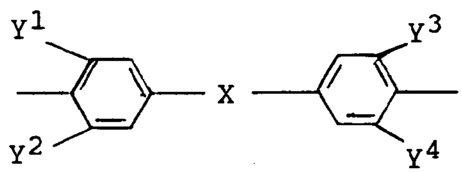 (IV)

wherein $Y^1$ to $Y^4$ have the meanings indicated for formula (I) and may also stand for phenyl, and wherein X denotes a divalent radical selected from

-O-, 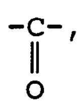, 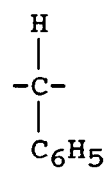, 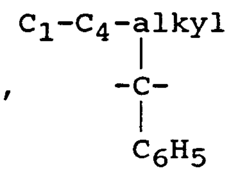, 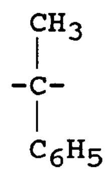, $-SO_2-$

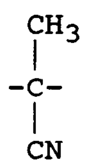, 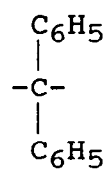, 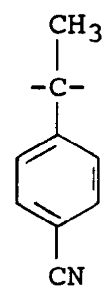, 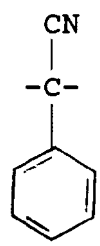

and (IVa)

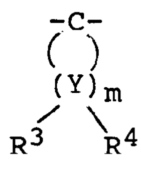 (IVa),

in which formula (IVa)
"m" denotes an integer with a value from 4 to 7,

| | |
|---|---|
| $R^3$ and $R^4$ | can be selected separately for each Y and denote, independently of one another, hydrogen or $C_1$-$C_6$-alkyl and |
| Y | denotes carbon |

with the proviso that $R^3$ and $R^4$ are identical or different.
used in quantities of from 0.05 mol-% to 20 mol-%, the molar sum of (I) + (II) amounting to 100 mol-%.

2. A process for the incorporation of additives in the polydiorganosiloxane block copolycarbonates obtainable according to claim 1, characterised in that at least one additive selected from stabilizers, flame retardants, pigments, flow improvers, mould release agents, antistatic agents, fillers and reinforcing materials is added in known manner to the polydiorganosiloxane block copolycarbonates before or during or after their preparation or during their processing to produce mouldings.

**Revendications**

**Revendications pour les Etats contractants suivants : DE, FR, GB, IT, NL**

1. Procédé de production de polydiorganosiloxanecopolycarbonates séquencés à partir de diphénols et d'α,ω-bis-hydroxyaryloxypolydiorganosiloxanes, d'agents de terminaison de chaîne, de donneurs de carbonates et, le cas échéant, d'agents de ramification dans les conditions réactionnelles connues d'une polycondensation à l'interface entre phases, caractérisé en ce qu'on utilise

   comme diphénols, des diphénols de formule (I)

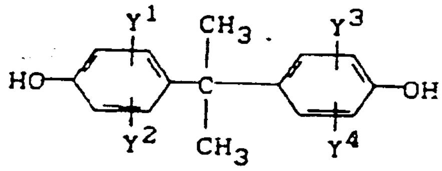

(I),

dans laquelle

   $Y^1$ à $Y^4$ sont identiques ou différents et représentent l'hydrogène, un halogène ou un groupe alkyle en $C_1$ à $C_4$,

   en quantités de 99,95 moles % à 80 moles % et

   comme α,ω-bishydroxyaryloxypolydiorganosiloxanes, des composés de formule (II)

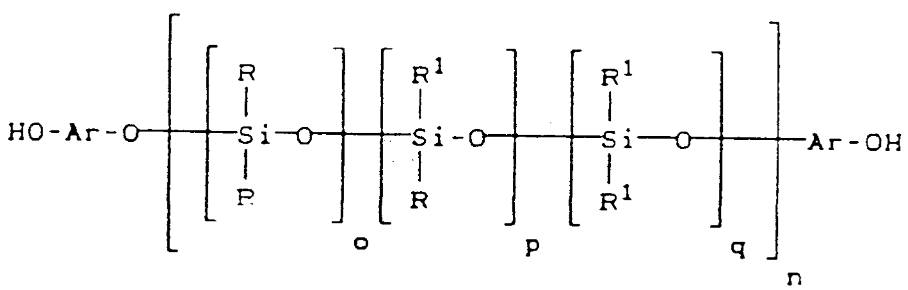

(II)

dans laquelle

R et $R^1$ sont identiques ou différents et représentent un reste alkyle linéaire en $C_1$ à $C_{20}$, un reste alkyle ramifié en $C_3$ en $C_{20}$, un reste alcényle en $C_2$ à $C_6$ ou un reste aryle en $C_6$ à $C_{14}$, les restes alkyle et les restes aryle pouvant être halogénés,

et

   le nombre n des motifs diorganosiloxy différent de la somme (o + p + q) ayant une valeur de 5 à 200, o, p et q pouvant représenter le nombre zéro ou des nombres entiers de 1 à 200 et -Ar- étant un reste divalent de formule (III)

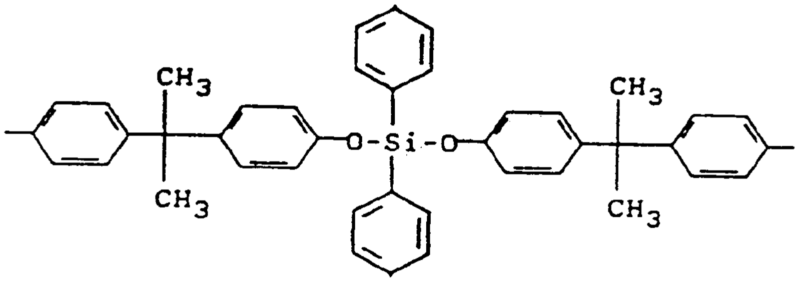

(III)

ou un reste divalent de formule générale (IV)

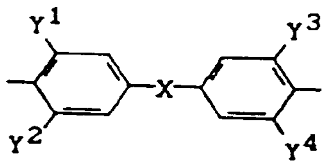

(IV),

où $Y^1$ à $Y^4$ ont la définition mentionnée pour la formule (I) et peuvent en outre représenter le groupe phényle et

-X- représente un reste divalent choisi entre les restes

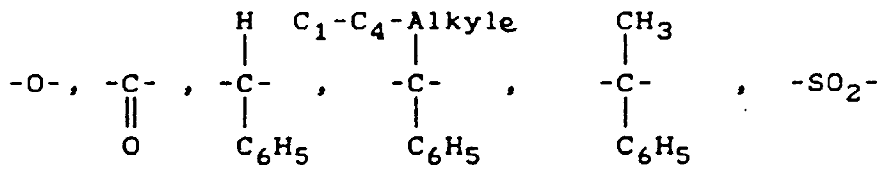

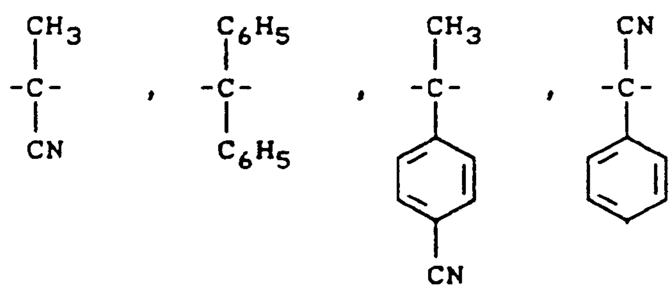

et (IVa)

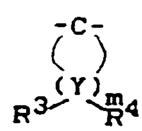

(IVa)

où dans (IVa)

"m" est un nombre entier de 4 à 7,

$R^3$ et $R^4$ pouvant être choisis, individuellement, pour chaque Y, représentent, indépendamment l'un de l'autre, l'hydrogène ou un groupe alkyle en $C_1$ à $C_6$,

et

Y représente le carbone,

sous réserve que $R^3$ et $R^4$ soient identiques ou différents,

en quantités de 0,05 mole % à 20 moles %,

la somme des moles de (I) et (II) étant dans chaque cas égale à 100 moles %.

2. Polydiorganosiloxane-copolycarbonates séquencés obtenus par le procédé suivant la revendication 1.

3. Procédé pour l'incorporation d'additifs aux polydiorganosiloxane-copolycarbonates séquencés suivant la revendication 2, caractérisé en ce qu'on mélange d'une manière connue aux polydiorganosiloxane-copolycarbonates séquencés avant ou pendant ou après leur production ou pendant leur transformation en corps de forme, au moins un additif choisi entre des agents stabilisants, des retardateurs de flamme, des pigments, des agents d'écoulement, des agents de démoulage, des agents antistatiques, des charges et des matières de renforcement.

4. Polydiorganosiloxane-copolycarbonates séquencés suivant la revendication 2, caractérisés en ce qu'ils contiennent au moins un additif choisi entre des agents stabilisants, des retardateurs de flamme, des pigments, des agents d'écoulement, des agents de démoulage, des agents antistatiques, des charges et des matières de renforcement.

**Revendications pour l'Etat contractant suivant : ES**

1. Procédé de production de polydiorganosiloxanecopolycarbonates séquencés à partir de diphénols et d'$\alpha,\omega$-bis-hydroxyaryloxypolydiorganosiloxanes, d'agents de terminaison de chaîne, de donneurs de carbonates et, le cas échéant, d'agents de ramification dans les conditions réactionnelles connues d'une polycondensation à l'interface entre phases, caractérisé en ce qu'on utilise

comme diphénols, des diphénols de formule (I)

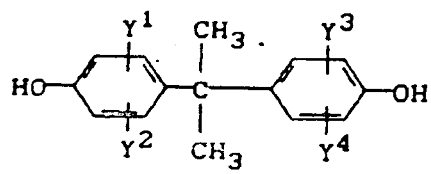

(I),

dans laquelle

$Y^1$ à $Y^4$ sont identiques ou différents et représentent l'hydrogène, un halogène ou un groupe alkyle en $C_1$ à $C_4$,

en quantités de 99,95 moles % à 80 moles % et

comme $\alpha,\omega$-bishydroxyaryloxypolydiorganosiloxanes, des composés de formule (II)

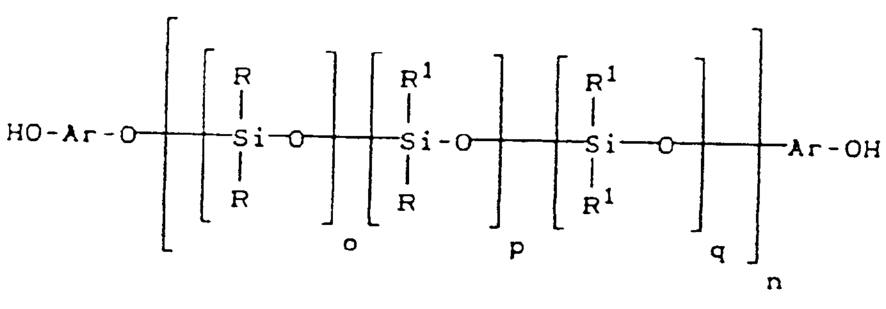

(II)

dans laquelle

R et $R^1$ sont identiques ou différents et représentent un reste alkyle linéaire en $C_1$ à $C_{20}$, un reste alkyle ramifié en $C_3$ en $C_{20}$, un reste alcényle en $C_2$ à $C_6$ ou un reste aryle en $C_6$ à $C_{14}$, les restes alkyle et les restes aryle pouvant être halogénés,

et

le nombre n des motifs diorganosiloxy différent de la somme (o + p + q) ayant une valeur de 5 à 200, o, p et q pouvant représenter le nombre zéro ou des nombres entiers de 1 à 200 et -Ar- étant un reste divalent de formule (III)

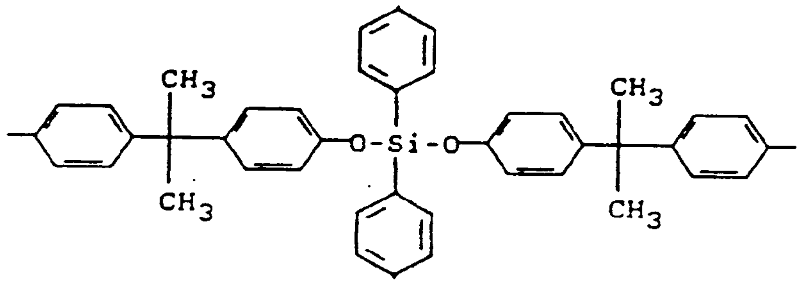 (III)

ou un reste divalent de formule générale (IV)

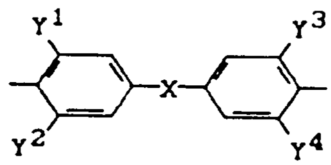 (IV),

où $Y^1$ à $Y^4$ ont la définition mentionnée pour la formule (I) et peuvent en outre représenter le groupe phényle et

-X- représente un reste divalent choisi entre les restes

-O-, 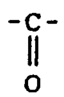, 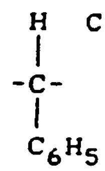, 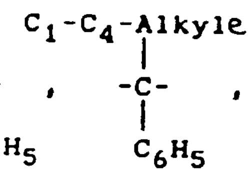, 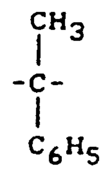, $-SO_2-$

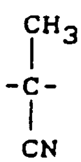, 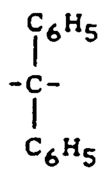, 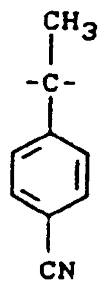, 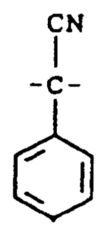.

et (IVa)

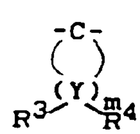 (IVa)

où dans (IVa)

"m" est un nombre entier de 4 à 7,

$R^3$ et $R^4$ pouvant être choisis, individuellement, pour chaque Y, représentent, indépendamment l'un de l'autre, l'hydrogène ou un groupe alkyle en $C_1$ à $C_6$,

et

Y représente le carbone,

sous réserve que $R^3$ et $R^4$ soient identiques ou différents,

en quantités de 0,05 mole % à 20 moles %,

la somme des moles de (I) et (II) étant dans chaque cas égale à 100 moles %.

2. Procédé d'incorporation d'additifs aux polydiorganosiloxane-copolycarbonates séquencés obtenus conformément au procédé suivant la revendication 1, caractérisé en ce qu'on ajoute aux polydiorganosiloxanecopolycarbonates séquencés d'une manière connue avant ou pendant ou après leur production ou pendant leur mise en oeuvre en corps de forme, un additif choisi entre des agents stabilisants, des retardateurs de flamme, des pigments, des agents d'écoulement, des agents de démoulage, des agents antistatiques, des charges et des matières de renforcement.